# EUROPÄISCHE PATENTSCHRIFT

(11) **EP 2 331 367 B1**
(45) Veröffentlichungstag und Bekanntmachung des Hinweises auf die Patenterteilung: **14.11.2012**
(21) Anmeldenummer: 08875539.2
(22) Anmeldetag: 23.12.2008
(51) Int. Cl.: B60R 1/06, B60R 1/076

(54) **SPIEGELHALTERUNG ZUM BEFESTIGEN EINES SPIEGELS AN EINEM FAHRZEUG UND SPIEGEL MIT EINER SOLCHEN SPIEGELHALTERUNG**
MIRROR HOLDER FOR SECURING A MIRROR TO A VEHICLE AND MIRROR COMPRISING SAID TYPE OF MIRROR HOLDER
FIXATION POUR MIROIR DESTINÉE À FIXER UN MIROIR SUR UN VÉHICULE ET MIROIR COMPORTANT LADITE FIXATION

(30) Priorität: 11.09.2008 DE 102008046795; 12.09.2008 DE 102008046980
(43) Veröffentlichungstag der Anmeldung: 15.06.2011
(73) Patentinhaber: MEKRA Lang GmbH & Co. KG, 90765 Fürth (DE)
(72) Erfinder: LANG, Werner, 91465 Ergersheim (DE); CENTMAYER, Stefan, 91465 Ergersheim (DE)
(74) Vertreter: Winter, Brandl, Fürniss, Hübner, Röss, Kaiser, Polte - Partnerschaft
(86) Internationale Anmeldenummer: PCT/EP2008/068249
(87) Internationale Veröffentlichungsnummer: WO 2010/028699

(56) Entgegenhaltungen:
- EP-A- 0 807 551
- EP-A- 1 038 730
- WO-A-03/016094
- DE-U1- 9 109 216

## Beschreibung

Die vorliegende Erfindung betrifft eine Spiegelhalterung zum Befestigen eines Spiegels an einem Fahrzeug und einen Spiegel mit einer solchen Spiegelhalterung.

Es ist bekannt, einen Spiegelarm durch eine Schraubverbindung mit einem Spiegelfuß zu verbinden. Hierbei kann durch entsprechende Stellung einer Mutter auf der Schraube eine Federkraft variiert und eingestellt werden.

Es ist ferner bekannt, unter Verzicht auf die Einstellbarkeit der Federkraft alternativ statt einer Schraube einen Bolzen in Kombination mit einer so genannten Quicklock-Sicherungsscheibe zu verwenden, wie dies bei einem Spiegel der niederländischen Firma DAF geschieht. Eine Quicklock-Verbindung hat jedoch den weiteren Nachteil, dass durch sie Teile unlösbar miteinander verbunden sind.

Aus der WO 2003/016094 A ist eine Spiegelanordnung bekannt, bei der ein Spiegelkopf mit Spiegelscheibe und Spiegelgehäuse mittels einer Bajonettverbindung mit einem am Fahrzeug befestigten Spielfuß verbunden wird. Hierbei durchsetzt der Bajonettstift zunächst einen Teil des Spiegelgehäuses und greift dann in eine Kulisse im Spiegelfuß ein. Eine ähnliche Spiegelanordnung ist auch aus der EP 0807551A2 bekannt.

Ausgehend von der WO 2003/016094 A ist es eine Aufgabe der vorliegenden Erfindung, eine Spiegelhalterung bereitzustellen, die einfach und kostengünstig ist und dabei die Anforderungen sowohl an die Abklappkräfte als auch an die Stabilität erfüllt.

Diese Aufgabe ist erfindungsgemäß durch die Merkmale des Anspruchs 1 gelöst.

Gemäß der vorliegenden Erfindung ist eine Spiegelhalterung zum Befestigen eines Spiegels an einem Fahrzeug, mit einem an dem Fahrzeug befestigbaren Spiegelfuß und einem Spiegelarm, der über ein Drehgelenk mit dem Spiegelfuß verbunden ist, wobei das Drehgelenk einen in dem Spiegelfuß angeordneten Lagerbock, ein in dem Spiegelarm angeordnetes Gegenlager und ein Hohlbolzen umfasst und der Hohlbolzen in dem Spiegelfuß und in dem Spiegelarm gesichert ist, wobei die Sicherung des Hohlbolzens in dem Spiegelarm oder dem Spiegelfuß nach Art eines Bajonettverschlusses ausgeführt ist. Der Bajonettverschluss ermöglicht eine zum Beispiel gegenüber einer Schraubverbindung schnellere und effizientere und damit zeit- und kostensparendere Befestigung des Spiegels an dem Fahrzeug. Gegenüber Klebeverbindungen oder den üblichen Clipverbindungen hat der Bajonettverschluss den Vorteil der Lösbarkeit. Der Hohlbolzen durchdringt den Lagerbock des Spiegelfußes und einen Bereich des Spiegelarms, und weist wenigstens eine Rastnase auf, die mit einer Kulisse in dem Spiegelarm oder dem Spiegelfuß in Eingriff steht. Der Spiegelarm umfasst ein erstes und ein zweites Armteil und wenigstens eine Rastnase des Hohlbolzens greift in die Kulisse im ersten Armteil ein.

Gemäß einer weiteren Ausführungsform der vorliegenden Erfindung ist das Drehgelenk als Rastgelenk ausgebildet.

Durch die Ausbildung des Drehgelenks als Rastgelenk ist eine in vorbestimmten Winkelabständen ausreichend feste und doch durch Überwinden eines vorbestimmten Moments an den Fahrer bzw. Beifahrer des Fahrzeugs anpassbare Position des Spiegels gegenüber dem Fahrzeug möglich. Dadurch, dass ab dem vorbestimmten Moment der Spiegel in angrenzende Winkelpositionen, zum Beispiel in eine Parkstellung, gebracht werden kann, ist auch die Gefahr der Beschädigung stark reduziert. Ebenso wird hierdurch die vorschriftsmäßige Abklappfunktion bei Aufprall auf ein Hindernis ermöglicht.

Für die Rastfunktion werden gemäß der vorliegenden Erfindung der Spiegelarm und der Spiegelfuß mittels einer Feder gegeneinander verspannt.

Durch die entsprechende Wahl der Feder kann das erforderliche Moment leicht festgelegt werden. Hierzu gilt es, eine Federkonstante zu wählen, mit der die entsprechende Federkraft erreicht wird. Zur Auslegung gilt es, die Rastgeometrie und die daraus resultierenden Haltekräfte zu berücksichtigen. Insbesondere erübrigt sich durch die gezielte Auslegung der Feder bei Einbau mit fixer Länge, eine Verschraubung zu verwenden, wobei bei jedem einzelnen Spiegelsystem die Federlänge abhängig vom resultierenden Moment eingestellt werden muss.

Gemäß einer weiteren Ausführungsform der vorliegenden Erfindung greifen ein Endabschnitt der Feder an dem Spiegelfuß und der weitere Endabschnitt der Feder an einem dem Spiegelfuß gegenüberliegenden Endabschnitt des Hohlbolzens (Anschlag für die Feder) an.

Gemäß einer weiteren Ausführungsform der vorliegenden Erfindung ist die Feder eine Spiralfeder, und der Hohlbolzen durchsetzt die Feder.

Gemäß einer weiteren Ausführungsform der vorliegenden Erfindung weist der Hohlbolzen eine Mehrzahl von Längsrippen zur Führung der Feder auf.

Dies hat den Vorteil, dass bei der Montage des Spiegelarms an den Spiegelfuß die Feder näherungsweise zentrisch auf dem Hohlbolzen positioniert ist, und zwar unabhängig von der Ausrichtung des Hohlbolzens bei der Montage. Hierdurch wird gewährleistet, dass die Federkraft sich gleichmäßig ringförmig nicht nur auf dem Anschlag für die Feder am Hohlbolzen verteilt - was ansonsten zu einer Biegebelastung auf den Hohlbolzen führt - sondern auch das Rastgelenk gleichmäßig belastet und somit auch eine gleichmäßige Kraftverteilung auf alle Rastzähne im Rastgelenk erfolgt.

Die erfindungsgemäße Teilung des Spiegelarms in einen ersten und einen zweiten Armteil, die zum Beispiel in Form einer unteren bzw. oberen Schale ausgebildet sein können, erleichtert die Montage. In diesem Fall ist es möglich, zuerst ein Armteil mit dem Spiegelfuß und dann das zweite Armteil mit dem ersten zu verbinden. Vor der Montage des zweiten Armteils können vorteilhafterweise Bauelement, die im Spiegelarm untergebracht werden sollen, leicht eingebaut werden.

Gemäß einer weiteren Ausführungsform der vorliegenden Erfindung umfasst der Spiegelarm ein erstes und ein zweites Armteil, weist der Hohlbolzen wenigstens eine erste und wenigstens eine zweite Rastnase auf, umfasst die Kulisse einen ersten Kulissenabschnitt, der im ersten Armteil angeordnet ist, und einen zweiten Kulissenabschnitt, der in dem zweiten Armteil angeordnet ist, steht die wenigstens eine erste Rastnase mit dem ersten Kulissenabschnitt in dem ersten Armteil und die wenigstens zweite Rastnase mit dem zweiten Kulissenabschnitt in dem zweiten Armteil in Eingriff.

Dies hat den Vorteil, dass der Hohlbolzen sowohl mit dem ersten als auch mit dem zweiten Armteil in Eingriff gelangen und somit eine verbesserte Befestigung des Armteils am Lagerbock erzielt werden kann.

Gemäß einer weiteren Ausführungsform der vorliegenden Erfindung liegen die zwei Kulissenabschnitte nach Art von Kreisringsegmenten in einer Ebene.

Durch die Anordnung der Kulissenabschnitte im Wesentlichen in einer Ebene ist ein Raumgewinn erreichbar, der dann zum Beispiel für den Einbau von Verstellmotoren oder dergleichen genutzt werden kann. Dies kann durch ausgeklügeltes Ineinandergreifen der Rastelemente erreicht werden. Insbesondere kann somit die Rastform am Hohlbolzen einfacher gestaltet werden, wenn die einzelnen Rastnasen im gleichmäßigen Winkel am Umfang verteilt liegen.

Gemäß einer weiteren Ausführungsform der vorliegenden Erfindung ist der Hohlbolzen rohrförmig.

Dies hat den Vorteil, dass Leitungen platzsparend in den Raum zwischen dem ersten und dem zweiten Armteil (zum Beispiel für einen Stellmotor) und zu einer Spiegelscheibe (zum Beispiel für eine Spiegelheizung) geführt werden können.

Gemäß einer weiteren Ausführungsform der vorliegenden Erfindung ist eine Gleitscheibe entweder zwischen der Feder und dem Spiegelfuß angeordnet, so dass eine Relativbewegung zwischen der Gleitscheibe und dem Spiegelfuß ermöglicht ist, oder eine Gleitscheibe ist zwischen der Feder und dem Endabschnitt des Hohlbolzens angeordnet, so dass eine Relativbewegung zwischen der Gleitscheibe und dem Endabschnitt des Hohlbolzens ermöglicht ist.

Gemäß einer weiteren Ausführungsform der vorliegenden Erfindung ist ein Spiegel mit Hilfe der oben beschriebenen Spiegelanordnung an einem Fahrzeug befestigt.

Die obigen und weitere Aufgaben, Eigenschaften und Vorteile der vorliegenden Erfindung sind aus der nachfolgenden detaillierten Beschreibung, die unter Bezugnahme auf die beigefügte Zeichnungen gemacht wurde, deutlicher ersichtlich. In den Zeichnungen sind:
Fig. 1 eine perspektivische Gesamtansicht einer Spiegelhalterung gemäß einer Ausführungsform der vorliegenden Erfindung;
Fig. 2 eine perspektivische Explosionsansicht der Ausführungsform von Fig. 1;
Fig. 3 eine Schnittansicht der der Ausführungsform entlang einer Linie III-III in Fig. 4;
Fig. 4 eine Schnittansicht der Ausführungsform entlang einer Linie IV-IV von Fig. 3; und
Fig. 5 eine Panorama-Ansicht eines Ausschnitts der Ausführungsform.

Nachfolgend ist eine vorteilhafte Ausführungsform der vorliegenden Erfindung mit Bezug auf die beigefügten Zeichnungen erläutert, wobei sich die Richtungen "oben" und "unten" bzw. die räumlichen Relationen "darüber" und "darunter" auf die dort gezeigte Anordnung beziehen. Die Allgemeingültigkeit ist dadurch nicht eingeschränkt.

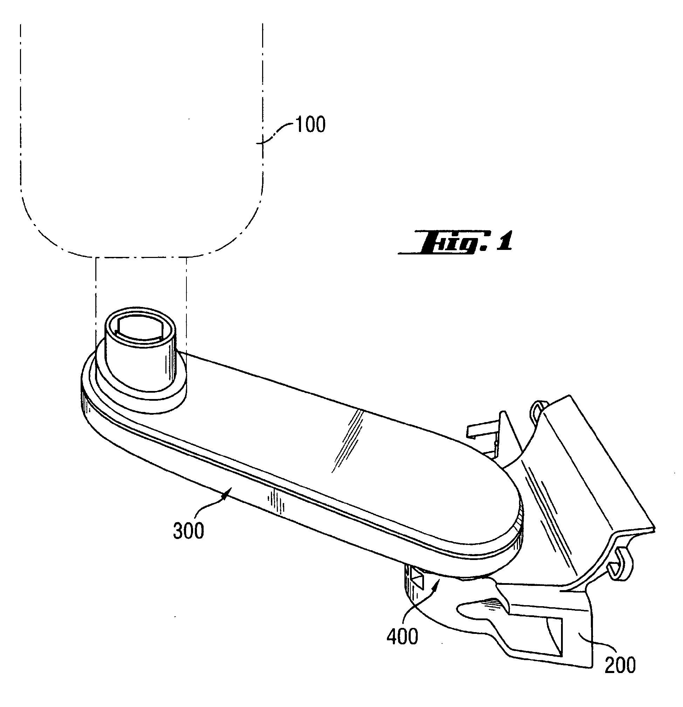

Fig. 1 zeigt eine perspektivische Ansicht einer Spiegelhalterung gemäß einer Ausführungsform der vorliegenden Erfindung.

Wie es in Fig. 1 schematisch gezeigt ist, umfasst eine Ausführungsform einer Spiegelhalterung zur Befestigung eines Spiegels 100 an einem Fahrzeug (nicht gezeigt) allgemein einen an dem Fahrzeug befestigbaren Spiegelfuß 200 und einen Spiegelarm 300, der über ein Drehgelenk 400 mit dem Spiegelfuß 200 verbunden ist.

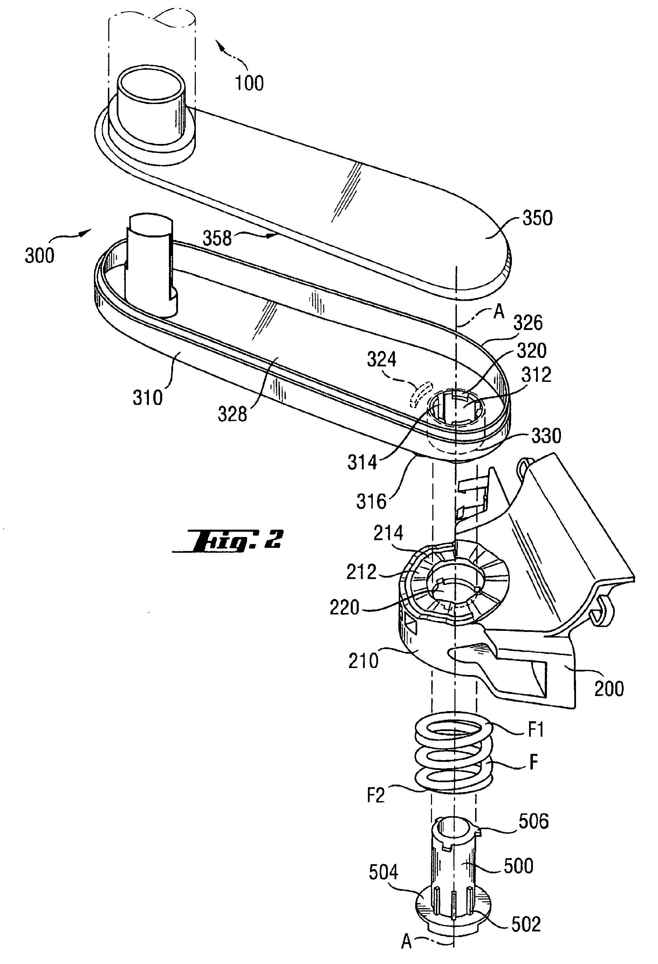

Fig. 2 zeigt schematisch die Hauptelemente der Spiegelhalterung von Fig. 1 in Explosionsdarstellung: Der Spiegelarm 300 umfasst ein erstes Armteil 310, das direkt mit dem Spiegelfuß 200 in Kontakt ist, und ein mit dem ersten Armteil 310 verbundenes und darüber angeordnetes zweites Armteil 350. Der Spiegelarm 300 ist mit Hilfe eines mit einer Federkraft einer Feder F beaufschlagten Hohlbolzens 500 gegenüber dem Spiegelfuß 200 vorgespannt und so an letzterem befestigt. Wie es in Fig. 2 schematisch gezeigt ist, sind die Kontaktflächen des ersten Armteils 310 und des Lagerbocks 210, die Teil des Gelenks 400 sind, als Rastflächen ausgebildet, die definierte, diskretveränderliche Winkelpositionen des Spiegels 100 gegenüber dem Fahrzeug ermöglichen, was nachstehend ausführlich beschrieben ist.

Insbesondere weist der Lagerbock 210 auf einer dem ersten Armteil 310 zugewandten Oberfläche eine lagerbockseitige Rastfläche 212 auf. Die lagerbockseitige Rastfläche 212 ist ringförmig ausgebildet. Rastelemente 214 der lagerbockseitigen Rastfläche 212 sind als Kreisringsegmente angeordnet. Ferner weist der erste Armteil 310 auf seiner der lagerbockseitigen Rastfläche 212 des Lagerbocks 210 gegenüberliegenden Oberfläche eine zu der lagerbockseitigen Rastfläche 212 komplementäre armseitige Rastfläche 316 mit Rastelementen 318 auf. Im montierten Zustand, wie er in Fig. 1 gezeigt ist, ist der erste Armteil 310 derart durch die Feder F und den Hohlbolzen 500 gegen den Spiegelfuß 200 vorgespannt, dass die jeweiligen Rastelemente 214, 318 der lagerbockseitigen bzw. armseitigen Rastflächen 212, 316 nach Form einer Hirth-Verzahnung ineinander greifen und eine stabile, jedoch durch Überwinden der durch die Verzahnung und die Federkonstante bestimmten Abklappkraft veränderliche Winkellage des Spiegels 100 gewährleisten. In montiertem Zustand greift ein Endabschnitt F1 der Feder F an einer inneren Wand 224 des Spiegelfußes 200 und ein weiterer Endabschnitt F2 der Feder F an dem Anschlag 504 des Hohlbolzens 500 an.

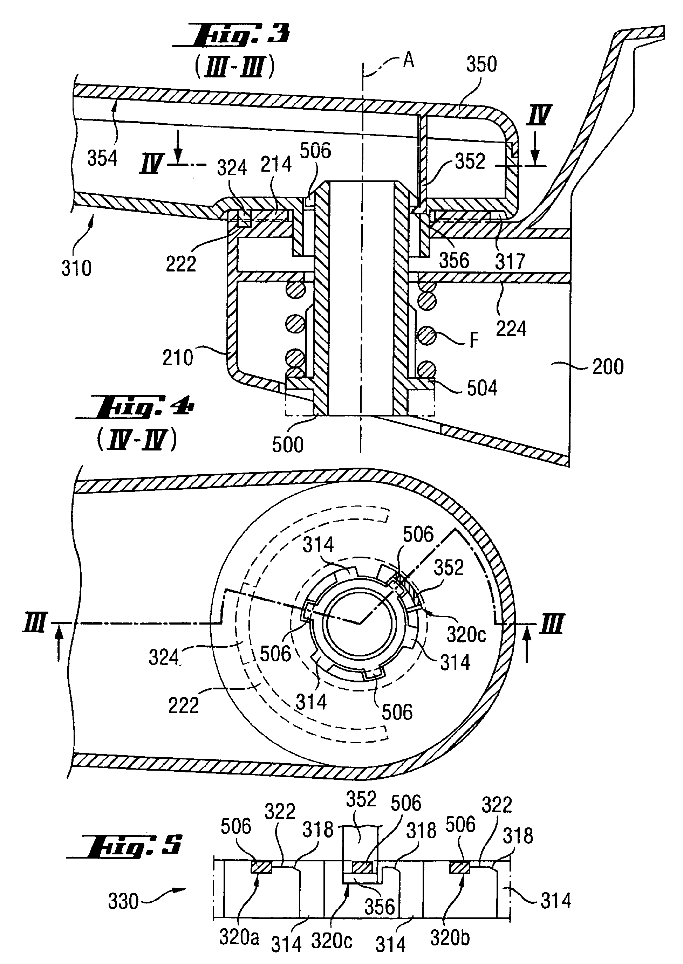

Wie es in den Fign. 2 und 3 gezeigt ist, ist in dem ersten Armteil 310 eine allgemein kreisförmige Durchführung 312 ausgebildet, die sich durch einen rohrartigen Aufsatz 330 nach unten fortsetzt, und der Spiegelfuß 200 umfasst einen Lagerbock 210, in dem ebenfalls eine allgemein kreisförmige Durchführung 220 ausgebildet ist. Der Hohlbolzen 500 ist zusammen mit der Feder F, die ihn umgibt, in der Durchführung 220 aufgenommen und erstreckt sich oben aus dem Lagerbock 210 und in die Durchführung 312 des ersten Armteils 310, wobei ein oberer Endabschnitt des Hohlbolzens 500 von dem Aufsatz 330 umgeben ist. Der Rohrbolzen 500 ist in dem Aufsatz 330 nach Art eines Bajonettverschlusses lösbar verankert, wie es nachstehend ausführlich beschrieben ist.

Wie es in Fig. 2 gezeigt ist, definieren die Durchführungen 220 und 312 durch ihre jeweiligen Mittelpunkte eine Achse A, die mit Längsachsen der Feder F und des Hohlbolzens 500 zusammenfällt.

Wie es in den Fign. 2 und 3 dargestellt ist, weist der Hohlbolzen 500 zur Führung und Lagerung der Feder F Längsrippen 502 bzw. einen Anschlag 504 auf. Ferner weist der Hohlbolzen 500 drei Rastnasen 506 auf, die an einem oberen Endabschnitt in gleichmäßigen Abständen entlang seines Umfangs angeordnet sind und in zur Achse A radialer Richtung hervorragen.

Auf einer inneren Umfangsoberfläche des Aufsatzes 330 der Durchführung 312 des ersten Armteils 310 sind drei identische, zu der Achse A parallele und bezüglich dieser rotationssymmetrisch angordnete Einführungsnuten 314 und drei ebenfalls rotationssymmetrisch angeordnete Rasttaschen 320a bis 320c angeordnet. Jeder der Einführungsnuten 314 ist eine der Rasttaschen 320a bis 320c zugeordnet, mit der sie über eine jeweilige Passierzone 322 verbunden ist. Mit anderen Worten, die Einführungsnuten 314 sind gegenüber den Rasttaschen 320a bis 320c gleichsinnig versetzt. Wie es in Fig. 5 gezeigt ist, sind die Rasttaschen 320a und 320b weniger tief und weniger breit ausgebildet als die Rasttasche 320c; Tiefe und Breite der beiden Rasttaschen 320a und 320b sind hingegen identisch.

Der erste Armteil 310 weist ferner eine in einem vorbestimmten Radius bezüglich der Achse A und in einer vorbestimmten Umfangslänge um diese ausgebildete Anschlagrippe 324 auf.

Der zweite Armteil 350 umfasst eine Haltefahne 352, die von seiner inneren Oberfläche 354 nach unten in Richtung des Hohlbolzens 500 hervorragt und an dessen Ende ein Haltehaken 356 in Richtung der Achse A absteht.

Die Armteile 310 und 350 weisen jeweils eine Fügekante 326 bzw. 358 auf, die ineinander greifen, wenn die Armteile 310 und 350 miteinander verbunden sind, wie es in Fig. 1 gezeigt ist.

Erfindungsgemäß kann entweder nur das erste Armteil 310 oder das erste Armteil 310 zusammen mit dem zweiten Armteil 350 mit Hilfe des Hohlbolzens 500 an dem Spiegelfuß 200 befestigt werden, wie es nachfolgend ausgeführt ist.

### (a) Befestigung des ersten Armteils 310

Zum Befestigen von nur dem ersten Armteil 310 des Spiegelarms 300 an dem Spiegelfuß 200 wird die Feder F über die Längsrippen 502 des Hohlbolzens 500 bis zu dem Anschlag 504 geschoben, diese Einheit von unten in die Durchführung 220 des Lagerbocks 210 eingeführt und gleichzeitig das erste Armteil 310 so an dem Spiegelfuß 200 angesetzt, dass die Rastelemente 214 und 317 der lagerbockseitigen bzw. armseitigen Rastfläche 212, 316 ineinander greifen. Anschließend wird der Hohlbolzen 500 gegen die Vorspannkraft der Feder F so weit in die Durchführung 312 eingeführt, bis sich die unteren Oberflächen der Rastnasen 506 auf Höhe ihrer zugehörigen Montage-Schrägen 318 (vgl. Fig. 5) befinden. Anschließend wird der Hohlbolzen 500 so gedreht, dass die Rastnasen 506 entlang ihrer zugehörigen Montage-Schrägen 318 auf den jeweiligen Passierzonen 322 gleiten und von dort schließlich entgegen der Einführungsrichtung des Hohlbolzens 500 in den jeweiligen Rasttaschen 320a bis 320c einrasten. Der Hohlbolzen 500 wird also zunächst in einer Einführungsrichtung (nach oben in den Figuren) entlang der Achse A über ihre endgültige Rastposition hinaus bewegt, gedreht, bis jede der Rastnasen 506 einer Rasttasche 322a bis 320c gegenüberüegt, und dann durch die Federkraft der Feder F in den jeweiligen Rasttaschen 322a bis 320c lösbar verriegelt. Wie es in Fig. 5 zu erkennen ist, in der die einzelnen Rastnasen 506 schraffiert dargestellt sind, befindet sich die Rastnase 322c nicht in Anlage an den ersten Armteil 310; sie trägt hier nicht zum Halt des Hohlbolzens 310 bei.

In montiertem Zustand des ersten Armteils 310 greift die Anschlagrippe 324 des ersten Armteils 310 in eine komplementäre, aber längere Anschlagnut 222 in dem Spiegelfuß 200 ein. Das Zusammenwirken von Anschlagrippe 324 und Anschlagnut 222 definiert einen Schwenkbereich des Spiegels 100 gegenüber dem Spiegelfuß 200 bzw. dem Fahrzeug.

Die in der inneren Oberfläche der Aufsatzes 330 der Durchführung 312 aus den Rasttaschen 320a und 320b, den zugehörigen Passierzonen 322 und Einführnuten 314 gebildete Struktur wirkt somit als Kulissenabschnitt, der der Führung von zwei der Rastnasen 506 des Hohlbolzens 500 während der Montage dient und mit dem die zwei Rastnasen 506 in montiertem Zustand in Eingriff sind, so dass der Hohlbolzen 500 fest aber lösbar mit dem Spiegelarm 300 verbunden und der Spiegel 100 fest, aber lös- und um das Gelenk 400 rastend schwenkbar an dem Spiegelfuß 200 befestigt ist.

Der Kontakt der Rastnasen 506 mit dem Kulissenabschnitt 320a, 320b, 322 und damit die Führung der Rastnasen 506 entlang des Kulissenabschnitts 320a, 320b, 322 wird durch die Kraft der Feder F gewährleistet. Mit anderen Worten, die Sicherung des Hohlbolzens 500 in dem Spiegelarm 300 oder dem Spiegelfuß 200, wie es oben beschrieben ist, ist nach Art eines Bajonettverschlusses ausgeführt.

### (b) Befestigung des ersten und zweiten Armteils 310, 350

Bei der gemeinsamen Befestigung des ersten und zweiten Armteils 310, 350 am Lagerbock 210 bzw. Spiegelfuß 200 muss nur Folgendes beachtet werden: Bevor der Hohlbolzen 500 eingeführt wird, müssen die beiden Armteile 310, 350 aufeinander gesteckt bzw. miteinander verbunden werden, und diese Einheit wird dann an dem Lagerbock 210 angesetzt, so dass die Rastelemente 214, 317 der lagerbockseitigen bzw. armseitigen Rastfläche 212, 316 ineinander greifen. In diesem Zustand ragt der Haltehaken 356 des zweiten Armteils 350 in die große Rasttasche 320c. Wird jetzt der Hohlbolzen 500 in die Durchführung 220 eingeführt und gedreht, wie es oben im Fall (a) beschrieben ist, so schiebt sich die bisher "freie" Rastnase über den Haltehaken 356. In diesem Zustand wird zum einen der Hohlbolzen 500 durch alle drei Rastnasen 320a bis 320c gehalten, und zum anderen das zweite Armteil 350 an dem ersten Armteil 310 bzw. an dem Spiegelfuß 200 befestigt. Damit alle Rastnasen 506 gleichermaßen zur Befestigung beitragen, ist sicherzustellen, dass der Haltehaken 356 exakt diejenige Stärke aufweist, die sich aus der Differenz der Tiefe der Rasttasche 320c und der Tiefe der Rasttaschen 320a, 320b ergibt.

Die in der inneren Oberfläche der Aufsatzes 330 der Durchführung 312 aus dem in der Rasttasche 320c aufgenommenen Haltehaken 356 des zweiten Armteils 350, der zugehörigen Passierzone 322 und Einführungsnut 314 gebildete Struktur wirkt im Fall (b) somit als *weiterer* Kulissenabschnitt, der der Führung der dritten der drei Rastnasen 506 des Hohlbolzens 500 während der Montage dient und mit dem die dritte der drei Rastnasen 506 in montiertem Zustand in Eingriff ist, so dass der Hohlbolzen 500 fest aber lösbar mit dem Spiegelarm 300 verbunden und der Spiegel 100 fest, aber lös- und um das Gelenk 400 rastend schwenkbar an dem Spiegelfuß 200 befestigt ist. Im Fall (b) sind daher alle drei Rastnasen 506 des Hohlbolzens 500 mit dem Spiegelarm 300, genauer mit dessen erstem bzw. zweitem Armteil 310 bzw. 350 gleichermaßen in Eingriff.

Auch im Fall (b) ist daher die Sicherung des Hohlbolzens 500 in dem Spiegelarm 300, wie es oben beschrieben ist, ist nach Art eines Bajonettverschlusses ausgeführt.

Die beiden Kulissenabschnitte bilden zusammen eine Kulisse in dem Spiegelarm, mit der zwei (im Fall (a)) oder drei (im Fall (b)) der Rastnasen des Hohlbolzens in montiertem Zustand in Eingriff sind.

Die rohrförmige Ausbildung des Hohlbolzens 500 dient der Versorgung einer in der Spiegelhalterung und/oder dem Spiegel untergebrachten Elektronik bzw. Motorik.

Die Anzahl der Rastnasen 320 (und damit zusammenhängend natürlich die der Einführungsnuten 314 etc.) ist erfindungsgemäß nicht auf drei begrenzt. Ebenso können mehrere Haltefahnen 352 vorgesehen sein. Ferner, obwohl der mögliche Schwenkbereich gemäß der Ausführungsform durch die Anschlagrippe 324 und die Anschlagnut 222 gebildet ist, ist die Erfindung nicht auf diese Anschlagform begrenzt, sondern jede andere zweckdienliche und konstruktiv mögliche Variante ist denkbar.

Obgleich die vorliegende Erfindung bezüglich der bevorzugten Ausführungsformen offenbart worden ist, um ein besseres Verständnis von diesen zu ermöglichen, sollte wahrgenommen werden, dass die Erfindung auf verschiedene Weisen verwirklicht werden kann, ohne den Umfang der Erfindung zu verlassen. Deshalb sollte die Erfindung derart verstanden werden, dass sie alle möglichen Ausführungsformen und Ausgestaltungen zu den gezeigten Ausführungsformen beinhaltet, die realisiert werden können, ohne den Umfang der Erfindung zu verlassen, wie er in den beigefügten Ansprüchen dargelegt ist.

### Bezugszeichenliste

- **100**: **Spiegel**
- **200**: **Spiegelfuß**
- 210: Lagerbock
- 212: Rastfläche (lagerbockseitige) von 210
- 214: Rastelemente von 210
- 220: Durchführung durch 210
- 222: Anschlagnut in 200
- 224: Innere Wand in 200
- **300**: **Spiegelarm**
- 310: Erstes Armteil
- 312: Durchführung durch 310
- 314: Einführungsnuten in 312
- 316: Rastfläche (armseitige) von 310
- 317: Rastelement von 310
- 318: Montage-Schräge in 312
- 320a-c: Rasttaschen in 312
- 322: Passierzonen in 312
- 324: Anschlagrippe an 310
- 326: Fügekante von 310
- 328: Innere Oberfläche von 310
- 330: Rohrartiger Aufsatz auf 312
- 350: Zweites Armteil
- 352: Haltefahne an 350
- 354: Innere Oberfläche von 350
- 356: Haltehaken an 352
- 358: Fügekanten von 350
- **400**: **Drehgelenk**
- **500**: **Hohlbolzen**
- 502: Längsrippen von 500
- 504: Anschlag von 500 für die Feder F
- 506: Rastnasen von 500
- A: Achse
- F: Feder

## Patentansprüche

1. Spiegelhalterung zur Befestigung eines Spiegels (100) an einem Fahrzeug, mit einem an dem Fahrzeug befestigbaren Spiegelfuß (200) und einem Spiegelarm (300), der über ein Drehgelenk (400) mit dem Spiegelfuß (200) verbunden ist,
wobei das Drehgelenk (400) einen in dem Spiegelfuß (200) angeordneten Lagerbock (210), ein in dem Spiegelarm (300) angeordnetes Gegenlager und ein Achsbauteil (500) umfasst, wobei das Achsbauteil (500) in dem Spiegelfuß (200) und in dem Spiegelarm (300) gesichert ist,
wobei die Sicherung des Achsbauteils (500) in dem Spiegelarm (300) oder dem Spiegelfuß (200) nach Art eines Bajonettverschlusses ausgeführt ist,
**dadurch gekennzeichnet,**
**dass** das Achsbauteil (500) den Lagerbock (210) des Spiegelfußes (200) sowie einen Bereich des Spiegelarms (300) durchdringt und wenigstens eine Rastnase (506) aufweist, die mit einer Kulisse (320a-320c, 314, 322, 356) in dem Spiegelarm (300) in Eingriff steht,
**dass** der Spiegelarm (300) ein erstes (310) und ein zweites Armteil (350) umfasst,
**dass** die Kulisse (320a-320c, 314, 322) in dem ersten Armteil (310) angeordnet ist, und
**dass** die wenigstens eine Rastnase (506) des Achsbauteils (500) mit der Kulisse (320a-320c, 314, 322) in dem ersten Armteil (310) des Spiegelarms (300) in Eingriff steht.

2. Spiegelhalterung nach einem der vorherigen Ansprüche, **dadurch gekennzeichnet, dass** das Drehgelenk (400) ein Rastgelenk ist.

3. Spiegelhalterung nach einem der vorherigen Ansprüche, **dadurch gekennzeichnet, dass** Spiegelarm (300) und Spiegelfuß (200) mittels einer Feder (F) gegeneinander verspannt sind.

4. Spiegelhalterung nach Anspruch 3, **dadurch gekennzeichnet, dass** ein Endabschnitt (F1) der Feder (F) an dem Spiegelfuß (200) bzw. dem Spiegelarm (300) und der weitere Endabschnitt (F2) der Feder (F) an einem dem Spiegelarm (300) bzw. dem Spiegelfuß (200) gegenüberliegenden Endabschnitt des Achsbauteils (500) angreift.

5. Spiegelhalterung nach Anspruch 3 oder 4, **dadurch gekennzeichnet, dass** die Feder (F) eine Spiralfeder ist und das Achsbauteil (500) die Feder (F) durchsetzt.

6. Spiegelhalterung nach Anspruch 5, **dadurch gekennzeichnet, dass** das Achsbauteil (500) eine Mehrzahl von Längsrippen (502) zur Führung der Feder (F) aufweist.

7. Spiegelhalterung nach einem der vorhergehenden Ansprüche, **dadurch gekennzeichnet,**
**dass** der Spiegelarm (300) ein erstes und ein zweites Armteil (310, 350) umfasst,
**dass** das Achsbauteil (500) wenigstens eine erste und wenigstens eine zweite Rastnase (506) aufweist,
**dass** die Kulisse (320a-320c, 314, 322, 356) einen ersten Kulissenabschnitt (320a, 320b, 314, 322) umfasst, der im ersten Armteil (310) angeordnet ist,
**dass** die Kulisse (320a-320c, 314, 322, 356) einen zweiten Kulissenabschnitt (320c, 314, 322) umfasst, der im zweiten Armteil (350) angeordnet ist,
**dass** die wenigstens eine erste Rastnase (506) mit dem ersten Kulissenabschnitt (320a, 320b, 314, 322) in dem ersten Rastarm (310) in Eingriff steht,
das die wenigstens eine zweite Rastnase (506) mit dem zweiten Kulissenabschnitt (320c, 314, 322) in dem zweiten Rastarm (350) in Eingriff steht.

8. Spiegelhalterung nach Anspruch 7, **dadurch gekennzeichnet, dass** die beiden Kulissenabschnitte () nach Art von Kreisringsegmenten () in einer Ebene liegen.

9. Spiegelhalterung nach einem der vorhergehenden Ansprüche, **dadurch gekennzeichnet, dass** das Achsbauteil (500) rohrförmig ist.

10. Spiegelhalterung nach einem der vorhergehenden Ansprüche, **dadurch gekennzeichnet, dass** der Spiegelarm (300) und / oder der Spiegelfuß (200) aus Kunststoff gebildet sind / ist.

11. Spiegelhalterung nach Anspruch 9, **dadurch gekennzeichnet, dass** durch das Achsbauteil (500) ein Kabel durchführbar ist.

12. Spiegelhalterung nach einem der vorhergehenden Ansprüche 4 bis 11, **dadurch gekennzeichnet, dass** eine Gleitscheibe entweder zwischen der Feder (F) und dem Spiegelfuß (200) angeordnet ist und eine Relativbewegung zwischen der Gleitscheibe und dem Spiegelfuß (200) ermöglicht, oder zwischen der Feder (F) und dem Endabschnitt des Achsbauteils (500) angeordnet ist und eine Relativbewegung zwischen der Gleitscheibe und dem Endabschnitt des Achsbauteils (500) ermöglicht.

13. Spiegel (100) mit einer Spiegelhalterung nach einem der vorhergehenden Ansprüche 1 bis 12.

## Claims

1. A mirror mount for fastening a mirror (100) to a vehicle, comprising a mirror base (200) adapted to be fastened to the vehicle, and a mirror arm (300) connected to the mirror base (200) through a rotary joint (400),
wherein the rotary joint (400) includes a bearing block (210) disposed in the mirror base (200), a bearing housing disposed in the mirror arm (300), and an axle component (500), wherein the axle component (500) is secured in the mirror base (200) and in the mirror arm (300),
wherein the mechanism of securing of the axle component (500) in the mirror arm (300) or the mirror base (200) is executed in the manner of a bayonet catch, **characterized in that**
the axle component (500) extends through the bearing block (210) of the mirror base (200) and an area of the mirror arm (300) and includes at least one retention nose (506) engaged with a slide means (320a-320c, 314, 322, 356) in the mirror arm (300),
the mirror arm (300) includes a first (310) and a second arm part (350),
the slide means (320a-320c, 314, 322) is disposed in the first arm part (310), and
the at least one retention nose (506) of the axle component (500) is engaged with the slide means (320a-320c, 314, 322) in the first arm part (310) of the mirror arm (300).

2. The mirror mount according to any one of the preceding claims, **characterized in that** the rotary joint (400) is a retention hinge.

3. The mirror mount according to any one of the preceding claims, **characterized in that** mirror arm (300) and mirror base (200) are braced against each other with the aid of a spring (F).

4. The mirror mount according to claim 3, **characterized in that** an end portion (F1) of the spring (F) attacks at the mirror base (200) or at the mirror arm (300), and the another end portion (F2) of the spring (F) attacks at an end portion of the axle component (500) opposite the mirror arm (300) or mirror base (200), respectively.

5. The mirror mount according to claim 3 or 4, **characterized in that** the spring (F) is a coil spring and the axle component (500) extends through the spring (F).

6. The mirror mount according to claim 5, **characterized in that** the axle component (500) includes a plurality of longitudinal webs (502) for guidance of the spring (F).

7. The mirror mount according to any one of the preceding claims, **characterized in that**
the mirror arm (300) includes a first and a second arm part (310, 350),
the axle component (500) includes at least one first and at least one second retention nose (506),
the slide means (320a-320c, 314, 322, 356) includes a first slide means portion (320a, 320b, 314, 322) disposed in the first arm part (310),
the slide means (320a-320c, 314, 322, 356) includes a second slide means portion (320c, 314, 322) disposed in the second arm part (350),
the at least one first retention nose (506) is engaged with the first slide means portion (320a, 320b, 314, 322) in the first retention arm (310),
the at least one second retention nose (506) is engaged with the second slide means portion (320c, 314, 322) in the second retention arm (350).

8. The mirror mount according to claim 7, **characterized in that** the two slide means portions () are co-planar in the manner of circular ring segments ().

9. The mirror mount according to any one of the preceding claims, **characterized in that** the axle component (500) is tube-shaped.

10. The mirror mount according to any one of the preceding claims, **characterized in that** the mirror arm (300) and/or the mirror base (200) is/are formed of synthetic material.

11. The mirror mount according to claim 9, **characterized in that** the axle component (500) is adapted to have a cable passed through it.

12. The mirror mount according to any one of the preceding claims 4 to 11, **characterized in that** a sliding disc is arranged either between the spring (F) and the mirror base (200), thus admitting a relative displacement of sliding disc and mirror base (200), or between the spring (F) and the end portion of the axle component (500), thus admitting a relative displacement of the sliding disc and the end portion of the axle component (500).

13. A mirror (100) having a mirror mount according to any one of the preceding claims 1 to 12.

## Revendications

1. Support de miroir, pour la fixation d'un miroir (100) sur un véhicule, comportant un pied de miroir (200) fixable contre le véhicule et un bras de miroir (300) relié au pied de miroir (200) par une articulation rotative (400),
l'articulation rotative (400) comprenant un support de palier (210) disposé dans le pied de miroir (200), un palier correspondant disposé dans le bras de miroir (300) et un composant axial (500), le composant axial (500) étant fixé dans le pied de miroir (200) et dans le bras de miroir (300),
la fixation du composant axial (500) dans le bras de miroir (300) ou le pied de miroir (200) étant réalisée à la façon d'un verrouillage à baïonnette,
**caractérisé en ce que**
le composant axial (500) traverse le support de palier (210) du pied de miroir (200) ainsi qu'une zone du bras de miroir (300), et comporte au moins un ergot d'enclenchement (506) qui s'engrène avec une coulisse (320a-320c, 314, 322, 356) dans le bras de miroir (300) engagé,
le bras de miroir (300) comprend une première (310) et une deuxième pièce de bras (350),
la coulisse (320a-320c, 314, 322) est disposée dans la première pièce de bras (310), et
le ou les ergots d'enclenchement (506) du composant axial (500) s'engrènent avec la coulisse (320a-320c, 314, 322) dans la première pièce de bras (310) du bras de miroir (300).

2. Support de miroir selon la revendication précédente, **caractérisé en ce que** l'articulation rotative (400) est une articulation à enclenchement.

3. Support de miroir selon l'une des revendications précédentes, **caractérisé en ce que** le bras de miroir (300) et le pied de miroir (200) sont serrés l'un contre au moyen d'un ressort (F).

4. Support de miroir selon la revendication 3, **caractérisé en ce qu'**une partie d'extrémité (F1) du ressort (F) s'engage axialement dans le pied de miroir (200) et le bras de miroir (300), et l'autre partie d'extrémité (F2) du ressort (F) dans une partie d'extrémité du composant axial (500) opposée au bras de miroir (300) et au pied de miroir (200).

5. Support de miroir selon la revendication 3 ou la revendication 4, **caractérisé en ce que** le ressort (F) est un ressort hélicoïdal, et **en ce que** le composant axial (500) traverse le ressort (F).

6. Support de miroir selon la revendication 5, **caractérisé en ce que** le composant axial (500) comporte une pluralité de nervures longitudinales (502) pour le guidage du ressort (F).

7. Support de miroir selon l'une des revendications précédentes, **caractérisé en ce que**
le bras de miroir (300) comprend une première et une deuxième pièce de bras (310, 350),
le composant axial (500) comporte au moins un premier et au moins un deuxième ergot d'enclenchement (506),
la coulisse (320a-320c, 314, 322, 356) comprend une première partie de coulisse (320a, 320b, 314, 322), disposée dans une première pièce de bras (310),
la coulisse (320a-320c, 314, 322, 356) comprend une deuxième partie de coulisse (320c, 314, 322) disposée dans une deuxième pièce de bras (350),
le ou les premiers ergots d'enclenchement (506) s'engrènent avec la première partie de coulisse (320a, 320b, 314, 322) dans le premier bras d'enclenchement (310),
le ou les deuxièmes ergots d'enclenchement (506) s'engrènent avec la deuxième partie de coulisse (320c, 314, 322) dans le deuxième bras d'enclenchement (350).

8. Support de miroir selon la revendication 7, **caractérisé en ce que** les deux parties de coulisse sont situées sur un même plan à la façon de segments de couronne.

9. Support de miroir selon l'une des revendications précédentes, **caractérisé en ce que** le composant axial (500) est tubulaire.

10. Support de miroir selon l'une des revendications précédentes, **caractérisé en ce que** le bras de miroir (300) et/ou le pied de miroir (200) sont en matière plastique.

11. Support de miroir selon la revendication 9, **caractérisé en ce qu'**un câble peut être passé au travers du composant axial (500).

12. Support de miroir selon l'une des revendications 4 à 11, **caractérisé en ce qu'**une rondelle coulissante est disposée soit entre le ressort (F) et le pied de miroir (200) et permet un déplacement relatif entre la rondelle coulissante et le pied de miroir (200), soit entre le ressort (F) et la partie d'extrémité du composant axial (500) et permet un déplacement relatif entre la rondelle coulissante et la partie d'extrémité du composant axial (500).

13. Miroir (100) avec un support de miroir selon l'une des revendications 1 à 12.
